# EUROPÄISCHE PATENTANMELDUNG

(11) **EP 2 051 104 A1**
(43) Veröffentlichungstag der Anmeldung: **22.04.2009**
(21) Anmeldenummer: 08018225.6
(22) Anmeldetag: 17.10.2008
(51) Int. Cl.: G01S 13/95, H01Q 21/28, H01Q 25/00, H01Q 3/06, G01S 7/36

(54) **Wetterradar mit Hilfsantenne zum Bestrahlen von RLAN-Systemen**

(30) Priorität: 20.10.2007 DE 102007050196
(71) Anmelder: SELEX Sistemi Integrati GmbH, 41470 Neuss (DE)
(72) Erfinder: Gekat, Frank, Dr., 51503 Rösrath (DE)
(74) Vertreter: Sparing Röhl Henseler Patentanwälte European Patent Attorneys

(57) **Zusammenfassung**

Wetterradar (1) mit einer an einem Turm (12) angeordneten Antenne (4) und der Antenne zugeordneten Sender (6) und Empfänger, wobei mindestens eine weitere Antenne (5) am Turm (12) vorgesehen ist, die so auf den Boden gerichtet und für eine Abstrahlung einer solchen Strahlleistung ausgelegt ist, dass mit dem aussendbaren Signal eine bei einem RLAN ankommende zur Detektion eines Wetterradars (1) hinreichende Strahlleistung abstrahlbar ist.

## Beschreibung

Die Erfindung betrifft ein Wetterradar nach dem Oberbegriff des Anspruchs 1.

Bei der Erfassung von Wetterdaten werden Wetterradars zur Wetterbeobachtung beispielsweise in der Nähe von Flughäfen eingesetzt. Die Wetterradars strahlen elektromagnetische Wellen über eine Antenne ab und empfangen die u.a. an Niederschlagsteilchen gestreuten elektromagnetischen Wellen wieder, um diese auszuwerten. Im Unterschied zu einem Radargerät für die Luftraumaufklärung werden die Koordinaten eines Zieles nicht nur detektiert, sondern das Echosignal wird auch in der Amplitude gemessen. Diese Daten geben Aufschluss darüber, in welcher Intensität und in welcher Konsistenz reflektierende Objekte im Beobachtungsraum existieren.

Der Frequenzbereich für Radargeräte, beispielsweise im Bereich von 5470 MHz bis 5725 MHz, wird auch von Radio Local Area Networks (RLAN) oder Wireless Local Area Networks (WLAN), d.h. drahtlosen lokalen Funknetzen, benutzt. Ein den gleichen Frequenzbereich des Radargeräts im Beobachtungsraum des Radargeräts befindliches RLAN stört die Erfassung von Daten durch das Radargerät. Daher werden Radargeräte als "primäre Dienste" und RLAN als "sekundäre Dienste" definiert, wobei ein RLAN die Frequenz umschalten muss, wenn es das Radargerät stört.

Durch die sogenannte "Radar Interference Detection" (RID) stellt das RLAN beim Einschalten und während des Betriebs automatisch fest, ob sich ein Radar in seiner Nähe befindet. Wenn dies der Fall ist, stellt das RLAN die Frequenz automatisch um ("Dynamic Frequency Selection", DFS). Beispielsweise werden Anforderungen an ein RLAN in dem genannten Frequenzbereich und an deren automatische Radardetektion in EN 301893: Broadband Radio Access Networks (BRAN); 5 GHz high performance RLAN beschrieben.

Die Antenne eines Wetterradargeräts zur Erfassung der Wetterdaten erzeugt einen symmetrischen Strahl (pencil beam), mit dem die Atmosphäre als Teil des Beobachtungsraums durch Rotation der Antenne im Azimuth bei unterschiedlichen Elevationswinkeln abgetastet wird.

Zur Abtastung des Beobachtungsraums werden verschiedene Verfahren, die sich in der Abfolge von Bewegungen im Azimuth und Bewegungen in der Elevation (Höhenwinkel oder Vertikalwinkel) unterscheiden, verwendet. Allen diesen Verfahren ist gemeinsam, dass die Antenne nur während eines kleinen Teils der Zeit, die für eine komplette Abtastung, einem sogenannten Scan oder Volumenscan, erforderlich ist, eine niedrige Elevation aufweist. Die RLANs können aber nur Radargeräte detektieren, wenn genug Signalenergie bzw. Strahlleistung bei ihnen ankommt. D.h., nur wenn die abstrahlende Antenne einen niedrigen Elevationswinkel aufweist, kommt über abgestrahlte Haupt- und Nebenkeulen der Antenne genug Signalenergie beim RLAN an, um das Radargerät zu detektieren und als Ergebnis das RLAN abzuschalten.

Aus F. Gekat, D. Rühl, M. Pool, "Analysis And Mitigation Of RLAN Interferences", vorgetragen bei der 33rd Int. Conf. Radar Meteorology, 06.08. bis 10.08.2007, Cairns, Australien sind Überlegungen bekannt, komplexe Filterstrategien zu verwenden, um eine Störung des Wetterradars durch RLANs zu unterdrücken. Jedoch selbst diese komplexen Filterstrategien sind nicht ausreichend, das Signal eines RLAN bei der Erfassung in einem Wetterradar bzw. im Radarsystem herauszufiltern. Mit den Filterstrategien können nur Signale herausgefiltert werden, die neben der Radarfrequenz liegen.

Aufgabe der Erfindung ist es daher, ein Wetterradar nach dem Oberbegriff des Anspruchs 1 zu schaffen, dessen Erfassung der Wetterdaten nicht durch RLANs gestört wird, und bei dem bei der Erfassung und Auswertung der Wetterdaten möglichst keine komplexen Filterstrategien oder komplexen Berechnungen zum Berücksichtigen eventueller Datenfehler aufgrund von RLAN-Interferenzen benötigt werden.

Diese Aufgabe wird durch die Merkmale des Anspruchs 1 gelöst.

Hierdurch wird ein Wetterradar geschaffen, das durch ein im Beobachtungsraum des Wetterradars angeordnetes RLAN detektierbar ist, indem neben der für die Wetterdatenerfassung vorgesehenen Antenne (Hauptantenne), der ein Sender und ein Empfänger zugeordnet ist, mindestens eine weitere Antenne (Signalisierungsantenne) am Turm des Wetterradars vorgesehen ist, deren Strahlung durch das RLAN detektiert wird. Die mindestens eine weitere Antenne ist auf den Boden gerichtet, da sie nicht zur Erfassung der Wetterdaten benötigt wird. Die mindestens eine weitere Antenne ist im Wesentlichen in den Bereich eines möglichen RLAN zur Detektion des Wetterradars durch das RLAN auf den Boden gerichtet und sendet Strahlleistung aus, die hinreichend ist, um vom RLAN zur Detektion eines Wetterradars erfasst zu werden und das RLAN zu veranlassen, automatisch die Frequenz umzuschalten. Die beim RLAN ankommende Signalleistung bzw. Strahlleistung kann damit höher sein als bei der Anstrahlung über eine Nebenkeule der Hauptantenne.

Vorzugsweise bewegt sich die mindestens eine weitere Antenne im Wesentlichen nicht oder nur geringfügig in der Elevation. In einer Ausführungsform strahlt die weitere Antenne mit fester eingestellter negativer (bodengerichteter) Elevation auf den das Radar umgebenden Bodenbereich. In einer anderen Ausführungsform bewegt sich die weitere Antenne in der Elevation geringfügig hin und her, um sicherzustellen, dass alle Bodenbereiche mit ausreichender Signalenergie versorgt werden. Es könnte insbesondere vorgesehen sein, dass die weitere Antenne länger auf vom Radar weiter beabstandeten Regionen verbleibt. Bei einer noch anderen Ausführungsform ist das Strahlprofil der Antenne optimiert, z.B. in einer Art, die den Gewinn für die weiter beabstandeten Regionen erhöht. Dabei kann auch die weitere Antenne mit optimiertem Strahlprofil in der Elevation bewegt werden. Damit kann die Detektion durch das RLAN durch die Erhöhung der beim RLAN ankommenden Signalleistung erheblich vergrößert werden.

Vorzugsweise befindet sich die mindestens eine weitere Antenne hinter der Hauptantenne und dreht sich mit der Hauptantenne im Azimuth, damit ihre Strahlung nicht den Signalempfang durch die Hauptantenne stört.

Vorzugsweise kann die mindestens eine weitere Antenne vom gleichen Sender wie die Antenne zur Erfassung der Wetterdaten (Hauptantenne) mit Signalen versorgt werden. Es ist dann lediglich ein Koppler im Signalpfad zwischen Antenne und Sender vorzusehen, an den sich ein Versorgungspfad zur mindestens einen weiteren Antenne anschließt.

Damit die von der mindestens einen weiteren Antenne empfangenen Signale bei gleichem Sender die Erfassung der Wetterdaten durch die Antenne nicht stören, und die von der mindestens einen weiteren Antenne empfangenen Daten über den Koppler nicht in den Signalpfad eingespeist werden, ist ein Isolator, d.h. eine Richtungsleitung, im Versorgungspfad vorgesehen. Der Isolator lässt eine Signalrichtung nur zur mindestens einen weiteren Antenne zu.

Um die Störung durch nicht abgeschaltete RLANs weiter zu verbessern, kann zur Steigerung der Effizienz die Strahlform der mindestens einen weiteren Antenne so geformt sein, dass ein langgestreckter Bodenstreifen mit der Strahlleistung der mindestens einen weiteren Antenne überdeckbar ist.

Zur weiteren Steigerung der Versorgung von im Beobachtungsraum des Wetterradars befindlichen RLANs mit Strahlleistung, um eine Detektion des Wetterradars durch die RLANs und eine daraus resultierende Abschaltung des RLANs zu erreichen, kann eine homogene Leistungsdichte der mindestens einen weiteren Antenne erreicht werden, indem die mindestens eine weitere Antenne eine mit der Entfernung zur mindestens einen weiteren Antenne zunehmende Strahlleistung aufweist.

Es kann bevorzugt sein, dass die mindestens eine weitere Antenne nicht von dem selben Sender wie die Antenne zur Erfassung der Wetterdaten (Hauptantenne) versorgt wird, weil die Hauptantenne zu viele Signale von der mindestens einen weiteren Antenne empfängt. Der mindestens eine weitere Sender sendet Signale mit mindestens einer Frequenz oder mehreren Frequenzen dicht neben dem Radarband, so dass das empfangene Signal aufgrund der mindestens einen weiteren Antenne vom Radarempfänger gefiltert wird. Die mindestens eine Frequenz oder die mehreren Frequenzen liegen dabei im RLAN-Band, das viel breiter als ein Radarband ist.

Die Modulation des Signals von der mindestens einen weiteren Antenne kann bei Verwendung eines von der Hauptantenne unterschiedlichen mindestens einen weiteren Senders für die Detektion durch das RLAN optimiert werden. Der Signalerzeuger des mindestens einen Senders ist programmierbar, damit verschiedene Signalformen erzeugt werden können, das Signal der mindestens einen weiteren Antenne kann gepulst oder im Dauerstrichbetrieb (cw) vorgesehen sein.

Vorzugsweise kann eine Optimierung dadurch erreicht werden, dass das Signal für die mindestens eine weitere Antenne nur in bestimmten Sektoren eingeschaltet wird, sofern eine drehbare mindestens eine weitere Antenne verwendet wird. Die Möglichkeit der Störung der empfangenen Signale durch die von der mindestens einen weiteren Antenne hervorgerufenen Signale wird dadurch minimiert.

Vorzugsweise kann das Signal, das die mindestens eine weitere Antenne abstrahlt, auch in der Leistung so optimiert sein, dass die Entdeckungsschwelle der RLANs gerade überschritten wird. So wird die Störung für die Radar-Datenaquisition minimiert.

Zur Verringerung zu großer Pausenzeiten kann die (Azimuth-)Rotation bei der mindestens einen weiteren Antenne dadurch ersetzt werden, dass die mindestens eine weitere Antenne stationär fest installiert ist und einen Bereich mit Strahlleistung überdeckt, in dem RLANs vermutet werden. Weiter bevorzugt werden mehrere weitere Antennen stationär am Wetterradar installiert, die ringförmig um das Wetterradar angeordnet sind, so dass ein größerer Bereich mit Strahlleistung überdeckt werden kann. Insbesondere bevorzugt ist dabei, die mehreren ringförmig angeordneten weiteren Antennen so anzuordnen, dass sie den Boden im Beobachtungsraum des Wetterradars nahezu vollständig mit Strahlleistung überdecken bzw. überstreichen, um die im überdeckten Bereich befindlichen RLANs mit hinreichender Strahlleistung zu versorgen.

Vorzugsweise sind am Turm fest installierte Antennen für den Zeitraum abschaltbar, wenn die Hauptantenne ihren Erfassungsbereich durchläuft.

Weitere Ausgestaltungen der Erfindung sind den Unteransprüchen und der nachfolgenden Beschreibung zu entnehmen.

Die Erfindung wird nachstehend anhand des in den beigefügten Abbildungen dargestellten Ausführungsbeispiels näher erläutert.
Fig. 1 zeigt schematisch ein Wetterradar nach dem Stand der Technik;
Fig. 2 zeigt schematisch ein erfindungsgemäßes Wetterradar;
Fig. 3 zeigt schematisch eine Schaltung für das Wetterradar gemäß Fig. 2;
Fig. 4 zeigt schematisch eine weitere Schaltung für das Wetteradar gemäß Fig. 2;
Fig. 5 zeigt schematisch eine weitere Schaltung für das Wetterradar gemäß Fig. 2;
Fig. 6 zeigt schematisch eine weitere Ausführungsform eines erfindungsgemäßen Wetterradars.

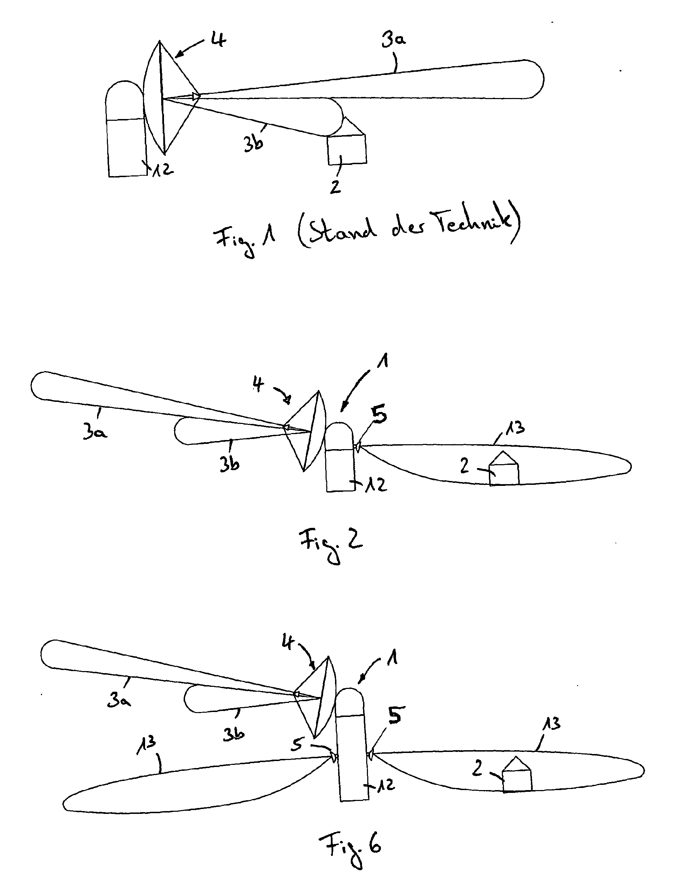

Fig. 1 zeigt ein Wetterradar 1 mit einer Antenne 4 nach dem Stand der Technik. Die Antenne 4 sendet Signale bzw. Strahlung in Form einer Hauptkeule 3a und einer Nebenkeule 3b aus. Die Antenne 4 ist drehbar an einem Turm 12 angeordnet. Neben der Rotation um den Azimuthwinkel ist eine Drehung um einen Vertikalwinkel (Elevation bzw. Höhenwinkel) möglich, um den Beobachtungsraum vollständig abzutasten. Neben der Aussendung von Signalen durch die Antenne 4 können mit der Antenne 4 auch Signale empfangen werden und in einem Empfänger ausgewertet werden. Ein im Beobachtungsraum des Wetterradars 1 befindliches RLAN in einem Haus 2 empfängt bzw. detektiert die Strahlleistung der Nebenkeule 3b, wodurch das Wetterradar 1 durch das RLAN detektierbar ist.

Bei dem in Fig. 2 gezeigten erfindungsgemäßen Wetterradar 1 ist neben der Antenne 4, die als Hauptantenne die Wetterdaten erfasst, mindestens eine weitere Antenne 5 vorgesehen, die ihrerseits Strahlleistung in Form einer Strahlungskeule 13 aussendet, die von einem im Beobachtungsraum befindlichen RLAN in einem Haus 2 detektiert werden kann, dabei ist die mindestens eine weitere Antenne 5 auf den Boden gerichtet. Die Strahlleistung bzw. Signalleistung der mindestens einen weiteren Antenne 5 ist hinreichend hoch, damit das RLAN das Wetterradar 1 detektiert, und das RLAN kann automatisch die Frequenz umschalten.

Die mindestens eine weitere Antenne 5 kann eine konstante Elevation aufweisen und im wesentlichen in den Bereich eines möglichen RLAN zum Aussenden von Strahlleistung bzw. Strahlung gerichtet sein. Im in Fig. 2 dargestellten Ausführungsbeispiel dreht sich die mindestens eine weitere Antenne 5 um den Turm 12 und befindet sich hinter der eigentlichen Antenne 4, d.h. in ihrem Hochfrequenz-Schatten. Die mindestens eine weitere Antenne 5 strahlt während ihrer Drehung mit konstanter Elevation im Wesentlichen in Richtung des Bodens.

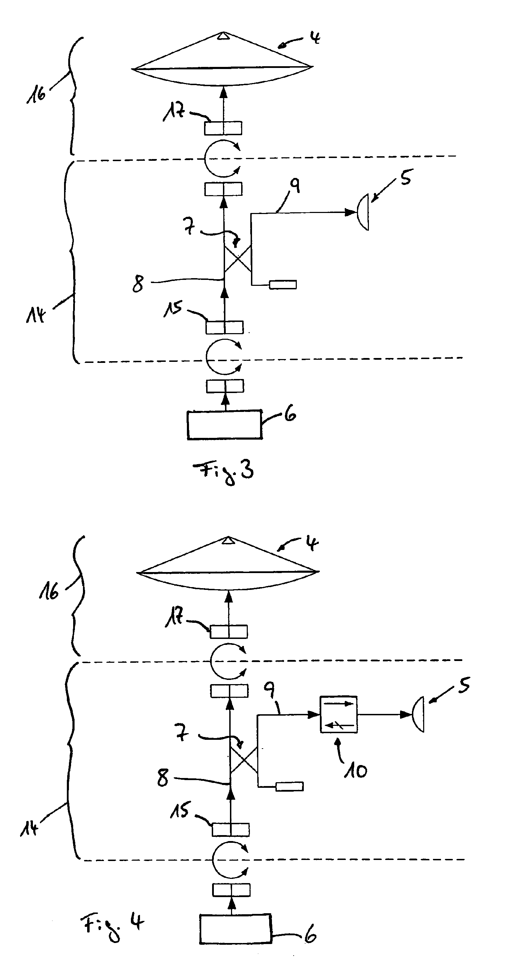

In Fig. 3 ist eine Schaltung dargestellt, die einen Sender 6 zeigt, der der Antenne 4 und der mindestens einen weiteren Antenne 5 Pulse zuführen kann. Der Sender 6 weist dazu einen Signalerzeuger auf. Durch die Schaltung der Fig. 3 ist eine synchrone Abstrahlung durch die Antennen 4 und 5 möglich, da ein Koppler 7 vorgesehen ist, der im Signalpfad 8 der Antenne 4 angeordnet und über einen Versorgungspfad 9 mit der mindestens einen weiteren Antenne 5 verbunden ist. Die der Antenne 4 vom Sender 6 zugeführten Pulse bzw. Signale werden demnach auch der Antenne 5 zugeführt. Die Fig. 3 zeigt schematisch den Bereich der Azimuth-Drehebene 14 mit der Azimuth-Drehkupplung 15 (rotary joint), und den Bereich der Elevations-Drehebene 16 mit der Elevations-Drehkupplung 17 (rotary joint). Dadurch, dass die mindestens eine weitere Antenne 5 in ihrer Elevation festgelegt bzw. vorbestimmt ist, ist die mindestens eine weitere Antenne 5 in der Azimuth-Drehebene 14 dargestellt.

Fig. 4 zeigt die Schaltung gemäß Fig. 3, wobei im Versorgungspfad 9 der mindestens einen weiteren Antenne 5 ein Isolator 10 angeordnet ist, der nur eine Signalrichtung zulässt. Der Isolator 10 lässt nur Signale in Richtung der mindestens einen weiteren Antenne 5 zu.

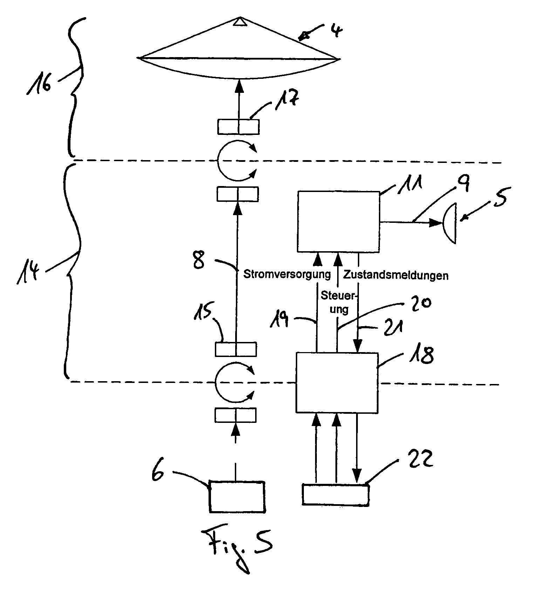

Fig. 5 zeigt eine alternative Schaltung für das Wetterradar 1 gemäß Fig. 2, bei dem die mindestens eine weitere Antenne 5 über mindestens einen weiteren Sender 11 versorgt wird. Die mindestens eine weitere Antenne 5 ist nicht mehr mit dem Versorgungspfad 9 an den Signalpfad 8 gekoppelt, sondern der Versorgungspfad 9 verbindet die mindestens eine weitere Antenne 5 mit dem mindestens einen weiteren Sender 11. Beim Übergang zur Azimuth-Drehebene 14 ist ein Schleifring-Übertrager 18 vorgesehen, mit dem Leitungen 19, 20, 21 zur Stromversorgung, zur Steuerung und zur Übermittlung von Zustandsmeldungen von und zum Radarsystem 22 durchgeschleift werden. Der mindestens eine weitere Sender 11 kann mit einer Steuerung über die Leitung 20 so gesteuert werden, dass der mindestens eine weitere Sender 11 der mindestens einen weiteren Antenne 5 das Signal nur zuführt, wenn die mindestens eine weitere Antenne 5 vorbestimmte Sektoren des Drehbereichs bzw. Drehsektoren überstreicht.

Fig. 6 zeigt eine alternative Ausführungsform des erfindungsgemäßen Wetterradars 1, bei dem die mindestens eine weitere Antenne 5 drehfest, d.h. stationär angeordnet ist. In der in Fig. 6 dargestellten Ausführungsform sind zwei weitere Antennen 5 vorgesehen, die am Turm 12 des Wetterradars 1 angeordnet sind. Die fest installierten weiteren Antennen 5 sind ringförmig beabstandet zueinander um den Turm 12 angeordnet und überdecken unterschiedliche Bodenbereiche. Die Elevation der weiteren Antennen 5 ist im wesentlichen konstant. Es kann eine Steuerung vorgesehen sein, die die fest installierten weiteren Antennen 5 abschaltet, wenn die Antenne 4 jeweils den Erfassungsbereich der fest installierten weiteren Antennen 5 überstreicht. Die Drehung der Antenne 4 um den Turm 12 ist dann mit der Abstrahlung der fest installierten weiteren Antennen 5 korreliert.

## Patentansprüche

1. Wetterradar (1) mit einer an einem Turm (12) angeordneten Antenne (4) und
der Antenne zugeordneten Sender (6) und Empfänger, **dadurch gekennzeichnet, dass** mindestens eine weitere Antenne (5) am Turm (12) vorgesehen ist, die so auf den Boden gerichtet und für eine Abstrahlung einer solchen Strahlleistung ausgelegt ist, dass mit dem aussendbaren Signal eine bei einem RLAN ankommende zur Detektion eines Wetterradars (1) hinreichende Strahlleistung abstrahlbar ist.

2. Wetterradar (1) nach Anspruch 1, **dadurch gekennzeichnet, dass** die Elevation der mindestens einen weiteren Antenne (5) im Wesentlichen konstant ist.

3. Wetterradar (1) nach Anspruch 1, **dadurch gekennzeichnet, dass** die Elevation der mindestens einen weiteren Antenne (5) veränderbar und auf den Boden gerichtet ist.

4. Wetterradar (1) nach einem der Ansprüche 1 bis 3, **dadurch gekennzeichnet,**
**dass** zur synchronen Abstrahlung von Antenne (5) und der mindestens einen weiteren Antenne (5) ein Koppler im Signalpfad zwischen Sender (6) und Antenne (4) vorgesehen ist, an den sich ein Versorgungspfad (9) zum Verbinden mit der mindestens einen weiteren Antenne (5) anschließt.

5. Wetterradar (1) nach Anspruch 4, **dadurch gekennzeichnet, dass** in dem Versorgungspfad (9) mindestens ein nur die Signalrichtung zur mindestens einen weiteren Antenne (5) zulassender Isolator (10) vorgesehen ist.

6. Wetterradar (1) nach einem der Ansprüche 1 bis 5, **dadurch gekennzeichnet, dass** die Strahlform der mindestens einen weiteren Antenne (5) so geformt ist, dass mit der Strahlleistung der mindestens einen weiteren Antenne (5) ein langgestreckter Bodenstreifen überdeckbar ist.

7. Wetterradar (1) nach einem der Ansprüche 1 bis 6, **dadurch gekennzeichnet, dass** für eine homogene Leistungsdichte der mindestens einen weiteren Antenne (5) die mindestens eine weitere Antenne (5) eine mit der Entfernung zur mindestens einen weiteren Antenne (5) zunehmende Strahlleistung aufweist.

8. Wetterradar (1) nach einem der Ansprüche 1 bis 3 und 6 bis 7, **dadurch gekennzeichnet, dass** die mindestens eine weitere Antenne (5) über mindestens einen weiteren Sender (11) versorgbar ist, der eine vom Radarband unterschiedliche Frequenz aufweist.

9. Wetterradar (1) nach Anspruch 8, **dadurch gekennzeichnet, dass** das von dem mindestens einen weiteren Sender (11) der mindestens einen weiteren Antenne (5) zugeführte Signal für die Detektion durch das RLAN optimierbar ist.

10. Wetterradar (1) nach einem der Ansprüche 1 bis 9, **dadurch gekennzeichnet, dass** die mindestens eine weitere Antenne (5) drehbar ist und eine Steuerung vorgesehen ist, die das der mindestens einen weiteren Antenne (5) zugeführte Signal des mindestens einen weiteren Senders (11) wahlweise in vorbestimmten Sektoren des Drehbereichs an die mindestens eine weitere Antenne (5) schaltet.

11. Wetterradar (1) nach einem der Ansprüche 1 bis 9, **dadurch gekennzeichnet, dass** die mindestens eine weitere Antenne (5) ortsfest am Turm (12) des Wetterradars (1) installiert ist.

12. Wetterradar (1) nach Anspruch 11, **dadurch gekennzeichnet, dass** eine Steuerung vorgesehen ist, mit der die mindestens eine weitere Antenne (5), die ortsfest am Turm (12) installiert ist, für den Zeitraum, in dem die Antenne (4) den Erfassungsbereich der mindestens einen weiteren Antenne (5) überstreicht, abschaltbar ist.
